# FASCICULE DE BREVET EUROPEEN

(11) **EP 1 309 501 B1**
(45) Date de publication et mention de la délivrance du brevet: **20.10.2004**
(21) Numéro de dépôt: 01969577.4
(22) Date de dépôt: 06.08.2001
(51) Int. Cl.: B65D 85/48

(54) **CONTAINER POUR LE TRANSPORT DE FEUILLES DE VERRE**
TRANSPORTBEHÄLTER FÜR GLASSCHEIBEN
CONTAINER FOR TRANSPORTING GLASS SHEETS

(30) Priorité: 08.08.2000 BE 200000499
(43) Date de publication de la demande: 14.05.2003
(73) Titulaire: GLAVERBEL, B-1170 Bruxelles (BE)
(72) Inventeur: ALBERT, Gregory, c/o Glaverbel - Centre R. & D., B-6040 Jumet (BE); MALLIA, Carmelo, c/o Glaverbel - Centre R. & D., B-6040 Jumet (BE)
(74) Mandataire: Le Vaguerèse, Sylvain Jacques
(86) Numéro de dépôt international: PCT/EP2001/009139
(87) Numéro de publication internationale: WO 2002/012091

(56) Documents cités:
- EP-A- 0 376 799
- DE-B- 1 205 898
- DE-C- 167 693

## Description

La présente invention concerne les containers utilisés pour le transport et l'entreposage de feuilles de verre.

Le transport des feuilles de verre, et en particulier celui des feuilles façonnées destinées à l'industrie automobile soulève des problèmes variés. Les principaux sont évidemment la conservation parfaite de l'intégrité et de l'état de surface des produits concernés. Pour cela, ces produits sont généralement rassemblés en lots d'objets identiques sur des containers. Sur ces containers les feuilles sont disposées espacées les unes des autres.

Les feuilles doivent être maintenues fermement pour que les lots constitués demeurent stables au cours des manipulations et des chocs liés au transport. De façon typique, les feuilles sont disposées de manière sensiblement verticale sur des éléments formant crémaillère, qui les maintiennent séparées les unes des autres à leur partie inférieure. Ces assemblages comprennent aussi des systèmes de blocage en position, lesquels doivent nécessairement pouvoir être ajustés pour s'adapter à une certaine diversité de formes et de dimensions, les mêmes systèmes de transport devant pouvoir servir pour différents vitrages. Compte tenu de l'utilisation prolongée de ces containers, il est en effet nécessaire de pouvoir les utiliser pour des produits qui sont périodiquement modifiés, et/ou une grande variété de produits.

Pour répondre aux ajustements nécessaires, sur une structure définissant un volume global fixe, les containers comprennent habituellement des parties mobiles qui sont maintenues serrées contre les feuilles de verre au moyen d'éléments de type "sangles", également nommés "feuillards". En dépit de ces moyens d'ajustement, il est souvent nécessaire de compléter l'assemblage par l'adjonction de pièces de calage non solidaires de l'ensemble.

Un tel container, correspondant au préambule de la revendication 1 annexée, est décrit dans le document EP0376799.

Les dispositions utilisées, y compris les moyens de calage, sont habituellement satisfaisantes pour le maintien des feuilles.

Dans la pratique, tous les produits destinés à l'industrie sont soumis à des règles de plus en plus sévères pour ce qui concerne les obligations liées au respect de l'environnement. Les règlements en matière d'élimination des déchets étant très contraignants, par voie de conséquence, les clients destinataires exigent de leurs fournisseurs qu'ils leur livrent des produits qui ne génèrent pas de déchets. Dans ces conditions, tous les éléments qui ne sont pas retournés pour une utilisation ultérieure sont proscrits, ou en voie de l'être, ou au moins sujets de taxations dissuasives. C'est le cas des cales et liens utilisés jusqu'à présent. C'est aussi, dans une mesure moindre, le cas des sangles à usage unique.

Les inventeurs ont donc eu pour objectif de proposer des containers pour le transport des feuilles de verre qui ne nécessitent plus l'usage de produits non réutilisables, ou au moins limitent le plus possible l'usage de tels produits, tout en conservant la capacité de ces containers à recevoir sans difficulté des produits de formes et dimensions variées.

En premier lieu, les inventeurs se sont efforcés de supprimer toutes les cales constituées le plus souvent de blocs de matériau plus ou moins compressible, tel que les matériaux synthétiques expansés, notamment les polystyrènes très abondamment utilisés pour tous les usages d'emballage. Pour cela les inventeurs ont développé des moyens de fixation des lots de feuilles de verre qui permettent une adaptation simple et peu onéreuse aux différences de forme et de volume des lots disposés dans des containers.

Compte tenu du coût insignifiant des cales antérieurement utilisées, il était particulièrement important de proposer des moyens extrêmement simples, et donc peu coûteux, tout en garantissant une efficacité au moins égale, et de préférence bien supérieure aux simples cales utilisées précédemment. Ces moyens font l'objet de la partie caractérisante de la revendication 1.

Selon l'invention, sur un container du type comportant des moyens de fixation comprenant au moins une barre maintenue contre le lot de feuilles par la tension d'une sangle (ou feuillard), et par la sangle elle même, la distance entre le dossier et le point de passage de la sangle sur la barre est réglable le long de la barre pour correspondre à la dimension du lot disposé sur le container.

Le réglage de la distance du point de passage de la sangle est par exemple obtenu en utilisant une barre télescopique. Le point de passage est dans ce cas disposé à l'extrémité de la barre. C'est le déploiement de la barre télescopique qui permet d'ajuster la barre à la longueur la mieux adaptée aux dimensions du lot de feuilles. Ce mode de réalisation de l'invention permet bien d'atteindre le but recherché. Il nécessite cependant une modification complète des barres utilisées à l'heure actuelle. Pour cette raison les inventeurs ont aussi proposé une mise en oeuvre qui permette de conserver les barres existantes. Dans ce deuxième type de réalisation, la longueur de la barre reste inchangée, et le point de passage est réglable sur la longueur de cette barre.

Suivant un autre aspect de l'invention, pour limiter le volume de produits liés à l'utilisation de ces containers qui ne sont pas recyclés, la structure des sangles utilisées est modifiée de telle sorte qu'une part importante de celles-ci reste en permanence attachée à la structure du container.

Dans le même sens, l'invention propose encore que la sangle utilisée pour le blocage des feuilles de verre ne soit disposée que sur la partie de la barre de fixation qui est la plus éloignée du dossier du container.

L'invention est décrite de manière détaillée dans la suite de la description en faisant référence aux planches de dessins dans lesquelles:
- la figure 1 est une vue schématique en perspective d'un container de transport de feuilles de verre;
- la figure 2 est une vue schématique de côté, présentant l'emplacement de la sangle dans le mode traditionnel;
- la figure 3 est analogue à la précédente pour un mode réalisation selon l'invention;
- la figure 4 présente un détail agrandi, de la barre de brelage de la figure 3 ;
- la figure 5 montre en vue de face les dispositions respectives de certains éléments mis en oeuvre selon l'invention;
- la figure 6 analogue aux figures 2 et 3, présente un mode de réalisation avec sangle "courte";
- la figure 7 présente un autre mode de réalisation du type de celui de la figure 6;
- la figure 8 présente un détail du mode de fixation de la sangle sur le dossier du container;
- la figure 9 présente un mode de réalisation de barre de brelage dont la hauteur est variable.

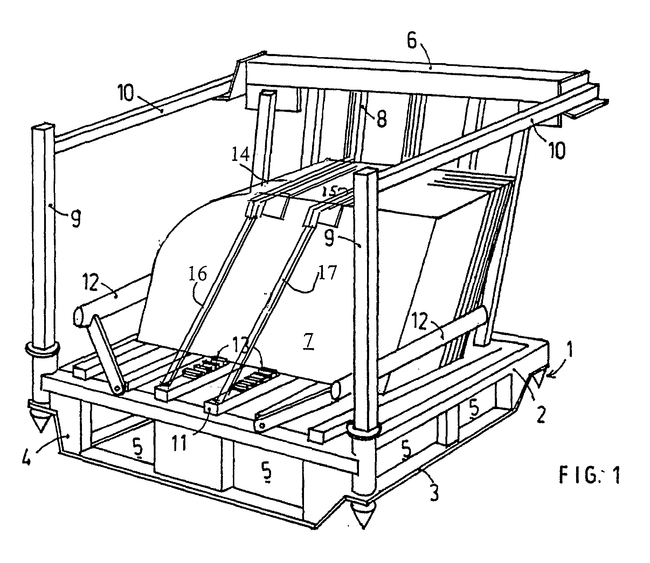

La figure 1 présente de manière schématique un container de transport de feuilles de verre.

Le container de la figure 1 comprend un socle, ou plancher, de forme sensiblement rectangulaire. Ce plancher est formé de deux cadres, supérieur 2 et inférieur 3, constitués de poutrelles. Les deux cadres sont fixés l'un à l'autre par des éléments entretoises 4 disposés aux coins des cadres et au milieu des côtés. La géométrie du socle 1 est telle qu'elle dégage des ouvertures 5 permettant l'enfourchement au moyen d'un chariot élévateur. Une paroi dorsale 6 ,ou dossier, constituée par des montants 8 qui peuvent être verticaux ou légèrement inclinés, sert d'appui à un empilement de feuilles de verre 7. Des montants 9, et des traverses hautes 10 complètent la définition du volume de ce container. Les feuilles de verre empilées reposent sur les traverses 11 fixées au cadre du plancher. Dans l'exemple présenté les feuilles de verre sont des vitres latérales d'automobile. Les mêmes types de containers sont utilisés pour les pare-brise ou toute autre feuille de verre. A la figure 1, des éléments de blocage latéral sont également représentés sous forme de deux barres 12, dont la position est réglable pour s'adapter à la forme et aux dimensions des feuilles empilées.

Dans le mode traditionnel représenté, les feuilles de verre, sur leur côté reposant sur le plancher, sont engagées dans les indentations des crémaillères 13 aménagées sur deux traverses 11. En partie haute les feuilles sont ordinairement séparées par des espaceurs constitués, par exemple, par des cavaliers 17 placés sur les feuilles elles mêmes. Les traverses 11, et crémaillères 13 sont réalisées dans des matériaux tel qu'à leur contact, les feuilles de verre ne risquent pas d'être endommagées. Il s'agit par exemple de profilés métalliques revêtus d'une bande d'un matériau synthétique rigide.

Le maintien des feuilles à la partie supérieure est obtenu par l'intermédiaire de barres dites de brelage 14 et 15. Ces barres sont engagées dans les montants 8, qui font partie du dossier, de manière coulissante pour permettre leur positionnement en hauteur correspondant aux dimensions de l'empilement de feuilles concerné.

Les barres 14 et 15 reposent sur les cavaliers/espaceurs disposés en ligne sur le bord supérieur des feuilles. De cette façon il n'y a pas de contact direct des barres 14 et 15 avec les feuilles. Les espaceurs, qui sont en matériau synthétique résilient, assurent le maintien, sans risque d'endommager les feuilles.

Des sangles 16 et 17 sont tendues sur les barres 14 et 15, qu'elles maintiennent appliquées fermement sur le sommet de l'empilement de feuilles. Ces sangles sont suffisamment rigides pour, une fois tendues, ne pas se desserrer sous les vibrations ou autres sollicitations mécaniques propres à ce type d'usage. Des sangles de ce type sont bien connues, et sont par exemple constituées de bandes de polypropylène armé.

Sur le mode présenté à la figure 1, on a omis les éléments de calage des feuilles de verre sur la face avant de l'empilement. Ces éléments de calage sont rendus nécessaires lorsque les barres dépassent la profondeur de l'empilement. En fait l'utilisation des cales est pratiquement systématique compte tenu du fait que la longueur des barres 14 et 15 n'étant pas ajustable, elle ne correspond généralement pas à la profondeur de l'empilement. La pression exercée sur le dessus de l'empilement est habituellement insuffisante pour maintenir les feuilles dans le sens de la profondeur, et les sangles ne sont pas au contact de la face avant de l'empilement.

De façon spontanée, la pratique s'est établie de compenser l'absence d'ajustement des dimensions des barres de brelage, par l'interposition entre les brins des sangles situés sur la face avant et la première feuille, d'un bloc de matériau de type polystyrène expansé, de façon à maintenir une pression modérée sur l'empilement.

Cette disposition usuelle n'est pas satisfaisante pour les destinataires pour les raisons indiquées précédemment.

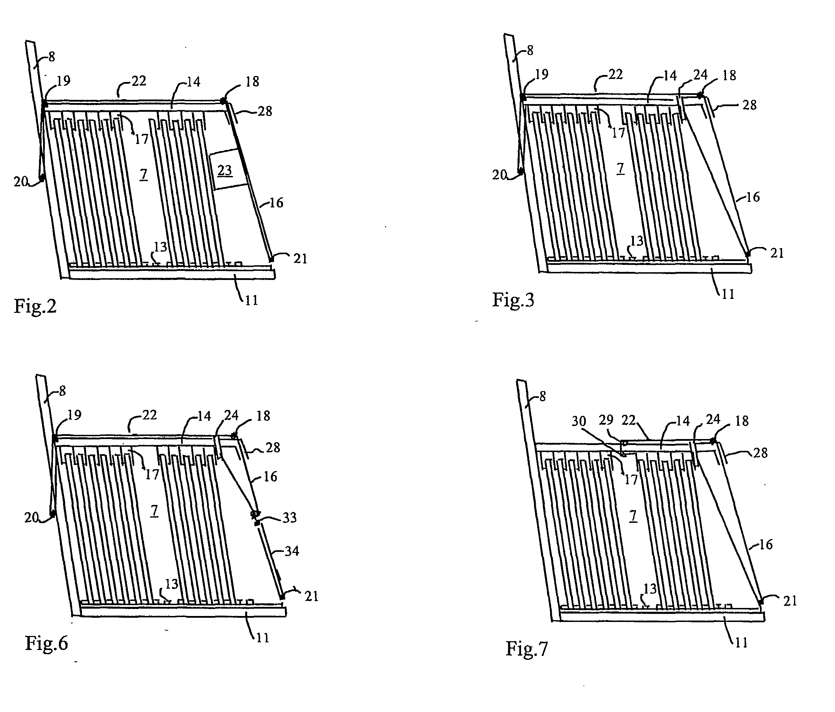

La figure 2 montre de manière schématique le mode d'assemblage antérieur. En particulie, cette figure présente l'emplacement de la sangle 16, et son engagement par rapport aux différents éléments de l'assemblage constitué.

Sur cette figure vue de côté, les feuilles de verre munies de cavaliers 17, sont engagées dans les indentations de la crémaillère 13 portée par la traverse 11. Le montant du dossier 8, est légèrement incliné par rapport à la verticale, ce qui permet de reporter une part sensible des efforts exercés dans une direction horizontale, sur le montant 8, et limite en conséquence le maintien nécessaire sur la face avant de l'empilement.

Le cavalier porté par la feuille la plus proche du dossier repose sur le montant 8, et prévient le contact direct avec la feuille de verre, contact qui serait générateur de rayures et d'abrasion. De même les cavaliers au contact les uns des autres remplissent la même fonction vis-à-vis des feuilles entre elles.

La barre 14 de brelage est maintenue en position sur les cavaliers, d'une part par l'engagement coulissant de son extrémité dans le montant 8, et d'autre part, par la pression exercée par la sangle 16. Cette dernière forme une boucle. Elle passe successivement sur les tiges fixées respectivement sur la barre 14(18, 19), sur le montant de dossier 8 (20), et sur un anneau 21 disposé à l'extrémité de la traverse 11. Il s'agit par exemple de tiges rondes qui laissent coulisser librement la sangle, de telle sorte que celle-ci soit maintenue en position, et bien tendue sur toute sa longueur.

La sangle est tendue de manière traditionnelle et soudée sur elle même comme indiqué en 22.

A l'exemple de la figure 2, la barre de brelage 14, dépasse largement la profondeur de l'empilement des feuilles. Les deux brins de la sangle 16 situés sur la face avant du container sont alors à distance des feuilles et ne peuvent participer au maintien en position de celles-ci. L'interposition d'une cale 23 d'épaisseur légèrement supérieure à la distance entre la face avant de l'empilement et la sangle, vient compenser l'absence de maintien direct.

La cale est nécessairement placée en regard de la partie haute de l'empilement. En dehors de l'inconvénient pour le destinataire de disposer de ces matériaux constituant des produits non recyclés, l'utilisation d'une cale n'est pas entièrement satisfaisante. Le maintien de la position de celle-ci n'est pas parfaitement garanti. Il n'est assuré que par la pression exercée par la sangle. Des chocs ou des vibrations au cours des manipulations ou du transport peuvent occasionner le déplacement de la cale. Le cas échéant ceci peut même conduire à la libération de la cale et donc à une perte de stabilité de l'empilement.

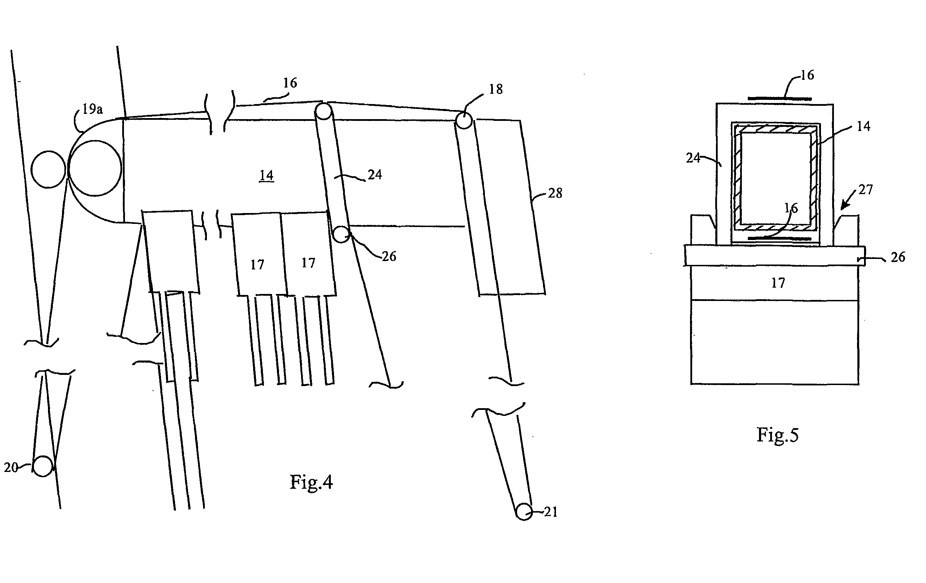

Le mode de réalisation correspondant à l'invention représenté à la figure 3, permet de résoudre ces difficultés, en obtenant la stabilisation de l'empilement dans le sens de la profondeur au moyen de la sangle elle même, laquelle est stable en position et en tension. En outre ce mode de réalisation élimine l'usage des cales.

Dans ce mode de réalisation, on retrouve la même structure d'ensemble du container, et la même disposition de l'empilement de feuilles 7 qu'à la figure 2. La disposition de la sangle 16, par rapport à l'empilement et à la barre de brelage, est modifiée de telle sorte qu'elle assure aussi le maintien dans la profondeur, et en position haute de l'empilement. Pour cela, la sangle passe dans un élément 24, tel qu'un anneau, élément mobile en translation sur la barre de brelage 14. Dans l'exemple présenté, la sangle passe encore comme précédemment sur les tiges 18, 19, 20 et l'anneau 21. Elle passe éventuellement sur une tige fixée sous la barre de brelage 14 du coté du montant de dossier 8. Cette dernière évite toute traction importante sur le cavalier en contact avec le montant 8. Cette tige peut ne pas être nécessaire. La sangle peut s'appuyer directement sur le dernier cavalier.

La figure 4 montre en détail la barre 14 portant l'élément mobile 24.

Un anneau 24 de forme générale rectangulaire, et de section circulaire est engagé sur la barre 14. Les dimensions de cet anneau sont légèrement supérieures à celles de la section de la barre 14 de sorte que l'anneau 24 puisse coulisser librement et sans jeu latéral excessif.

La sangle 16 au dessus de la barre 14 prend appui sur l'anneau 24 et le plaque sur la barre. Elle passe sur la tige 18 et descend vers la tige 21 fixée sur la traverse 11. Elle remonte ensuite pour passer dans l'anneau 24.

La tension de la sangle plaque le coté inférieur 26 de l'anneau sur l'espaceur 17. La présence de l'anneau 24 permet un maintien de la sangle sous la barre 14. Un passage direct de celle-ci sur l'étrier 17 ne garantirait pas un positionnement convenable. Par ailleurs, si la sangle était appliquée directement sur l'espaceur 17, l'effort s'exercerait essentiellement dans une direction verticale. La composante horizontale serait limitée. En écartant le brin de sangle de l'étrier 17, le coté inférieur 26 de l'anneau 24 transforme une partie de la composante verticale en composante horizontale, favorisant le maintien recherché. Toujours à la figure 4, l'extrémité de la barre située du côté du dossier comporte une glissière 19a, qui se superpose à la tige 19. Cette glissière constituée par une paroi cylindrique rapportée à l'extrémité de la barre 14, améliore le glissement de la sangle lors de son serrage.

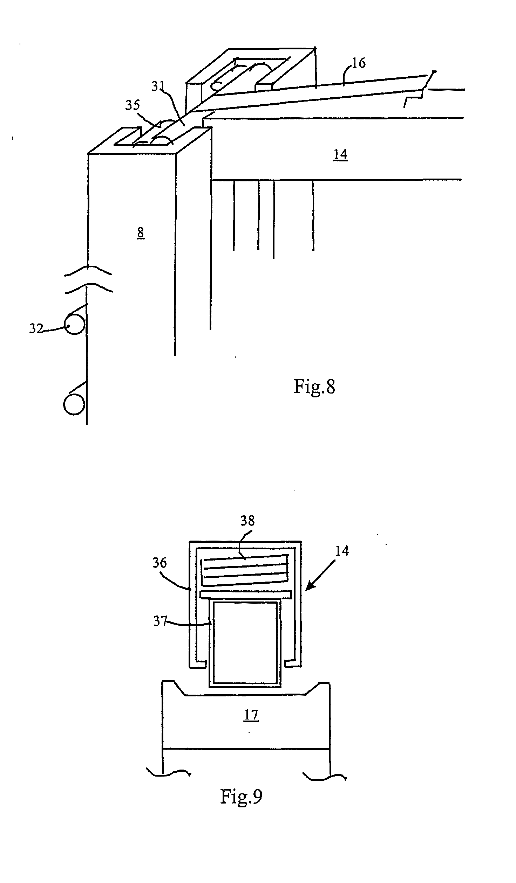

La figure 5 montre la position relative de l'anneau 24, de la barre de brelage 14 et de l'espaceur 17, correspondant à la configuration de la figure 4. Dans la forme présentée, la partie 26 de l'anneau 24, est de largeur supérieure à celle correspondant à la largeur nécessaire pour coulisser sur la barre 14. L'extension de la partie 26 permet de mieux répartir la pression exercée sur le haut de l'espaceur 17. La section de la partie 26 est aussi avantageusement plus importante pour favoriser la composante horizontale de la réaction qui s'exerce sur l'espaceur, comme il a été indiqué plus haut. Sur les figures 4 et 5, on remarque encore que la partie 26 de l'anneau 24, repose sur la partie de l'espaceur 17 située au dessus de la feuille de verre qui porte cet espaceur. Dans cette disposition, la compression exercée sur cette partie de l'espaceur ne peut endommager la feuille de verre.

Le dessin de l'espaceur montre encore à la figure 5, l'existence d'une rainure à sa partie supérieure. Cette rainure 27 est d'une largeur suffisante pour que la barre 14 puisse venir s'insérer. De cette façon les espaceurs restent convenablement alignés les uns par rapport aux autres. Cet alignement est la condition nécessaire pour que les distances entre les feuilles soient bien conservées.

La figure 5 montre encore l'emplacement de la sangle par rapport aux autres éléments. Le brin supérieur est disposé au dessus de la barre 14. Le brin inférieur passe dans la rainure 27, sous la barre 14.

A la figure 4, l'extrémité de la barre 14 porte un manchon 28,. dans lequel la sangle passe en direction de la traverse 11 et de l'anneau 21. Le manchon est solidaire de la barre 14. Le manchon 28 protège la sangle contre les pincements et les déchirures accidentelles de la sangle qui pourraient en résulter, aux emplacements où cette sangle est le plus exposée.

Dans les exemples des figures 2 et 3, la barre de brelage 14 est maintenue contre la partie haute de l'empilement par la tension de la sangle passant d'une part dans l'anneau 21 et d'autre part sur la tige 20 solidaire du montant 8. On a représenté qu'une seule tige 20. Pour s'adapter à toutes les dimensions d'empilements, le montant 8 peut comporter plusieurs tiges du même type disposées à distance les unes des autres sur la hauteur du montant 8. Pour limiter la longueur de la sangle utilisée, on choisit alors la tige la plus proche de la barre 14 située en dessous de cette dernière.

La fixation de la sangle sur le montant 8 nécessite l'utilisation d'une sangle relativement longue. Dans le but de limiter autant que possible cette longueur, l'invention propose encore en variante, de remplacer la sangle unique qui est mise au rebut après usage, par une sangle en deux parties. Partant de la constatation que la longueur de la sangle varie pour une part limitée, quelles que soient les dimensions de l'empilement de feuilles envisagé, les inventeurs proposent de laisser à demeure une boucle de la longueur minimum nécessaire pour s'adapter pratiquement à tous les empilements, et d'y associer une boucle d'ajustement, qui est seule mise au rebut après usage. La figure 6 illustre cette forme particulière.

La construction d'ensemble est du même type que pour l'exemple précédent. La sangle 16 forme une boucle dont l'extrémité sur la face avant porte un anneau de jonction 33. Cette sangle est de dimensions telles que pour les empilements les plus volumineux, l'anneau 33 soit relevé jusqu'à venir à proximité de la goulotte 28. Lorsque l'empilement est de dimensions moindres, l'extrémité de la sangle descend plus avant le long de la face de l'empilement. Le serrage s'effectue avec un deuxième élément de sangle 34, qui passe dans l'anneau 33 et , comme précédemment dans l'anneau 21.

Dans la configuration représentée, seule la boucle de sangle 34 est rompue au déchargement du container. La boucle de sangle 16 reste attachée au container, et est réutilisée aussi longtemps que sa structure reste intacte. Cette façon de procéder permet de réduire considérablement la quantité de sangle consommée, sans modifier la structure des containers existants.

Un autre exemple de construction selon l'invention, permettant de réduire le volume des sangles utilisé est représenté à la figure 7. Dans ce mode, la sangle ne passe que sur la barre de brelage 14, l'élément ajustable 24, et l'anneau 21 fixé à la traverse 11. On évite donc la fixation au montant du dossier 8.

Dans cette réalisation la sangle est passée sur les tiges 29 et 30, fixées sur la barre 14. Pour permettre le passage de la sangle, des ouvertures sont pratiquées en regard des tiges 29 et 30 dans les parois inférieures et supérieures de la barre 14. Pour cela la largeur de la sangle, et celle de la barre 14, sont choisies de telle sorte que la sangle puisse passer sans déformation dans l'ouverture. L'emplacement des tiges 29 et 30 et des ouvertures correspondantes sur la barre 14 est choisi pour permettre le positionnement de l'anneau 24, dans les configurations correspondant aux empilements les moins profonds que l'on rencontre dans la pratique.

Dans tous les montages des barres 14 et des sangles 16, la barre doit être maintenue fermement sur toute la profondeur de l'empilement. II est en particulier nécessaire que la barre 14 maintienne son appui sur les espaceurs disposés sur toutes les feuilles, y compris celles qui se trouvent proches du dossier.

La figure 8 montre le mode de fixation de la barre 14 sur le montant 8. A l'extrémité de la barre 14 un rondin 31 glisse dans le montant 8 en reposant sur les deux parois latérales des deux profilés en U constituant le montant 8. Des éléments 35, fixés au rondin 31 limitent le jeu longitudinal de la barre 14 après que celle-ci ait été mise à la hauteur adéquate. La sangle 16 passe sur le rondin 31 puis dans le montant 8 pour aller jusqu'à une tige 32 solidaire du montant 8 puis remonte pour venir sur le cavalier 17.

Le long du montant 8, plusieurs tiges telles que 32 sont disposées à intervalles réguliers. La sangle est passée sur la tige qui se trouve la plus proche de l'extrémité de la barre 14 pour réduire la longueur de la sangle le plus possible. Cette disposition est celle mise en oeuvre pour le montage des sangles qui sont du type représenté à la figure 3.

Dans le mode de montage de la figure 7, l'extrémité de la barre 14 est maintenue en position par une série d'indentations solidaires des parois des montants 8, et dans lesquelles s'insère le rondin 31. Ce type d'assemblage permet de maintenir la barre 14 selon une série de positions à intervalles réguliers. La distance entre deux positions successives est de l'ordre de grandeur du diamètre du rondin 31. Pour ajuster exactement la barre 14 sur les étriers 17, il est nécessaire de rattraper le jeu qui peut exister. Pour cela il est possible d'utiliser une barre de brelage du type schématisé à la figure 9. Dans ce cas, la barre 14 est en deux parties, et sa hauteur est variable de telle sorte que l'élément 37 reste plaqué sur les étriers 17. L'élément 37 mobile en hauteur dans le profilé 36, s'étend sur toute la longueur de la barre 14 L'élément 37 est repoussé vers les étriers 17 par le jeu de ressorts 38 logés dans la barre. Le débattement de l'élément 37 dans le profilé 36 est suffisant pour couvrir la distance séparant deux positions correspondant à deux indentations successives du dossier.

## Revendications

1. Container pour le transport et le stockage de lots de feuilles de verre (7) comprenant un plancher muni de moyens (13) de séparation des feuilles, un dossier sensiblement vertical, ou légèrement incliné, des moyens de blocage latéral (12) adaptables aux dimensions latérales des feuilles, et des barres de brelage (14, 15) disposées à la partie supérieure du lot de feuilles, une extrémité de ces barres étant engagée de manière coulissante dans des montants (8) constituant le dossier du container, lesdites barres de brelage étant plaquées contre le lot de feuilles par des sangles (16, 17) passant sur des points d'attache (20, 21) solidaires de la structure du container, **caractérisé en ce que** les sangles passent sur les barres de brelage, et **en ce que** pour maintenir le lot de feuilles dans la profondeur du container, la distance entre le dossier et le point de passage de chaque sangle sur chaque barre de brelage, du côté opposé au dossier, est réglable pour s'ajuster à la profondeur du lot de feuilles.

2. Container selon la revendication 1, dans lequel la distance entre le dossier et le point de passage de la sangle sur la barre de brelage est réglé par le jeu d'un assemblage télescopique de la barre.

3. Container selon la revendication 1, dans lequel la position du point de passage de la sangle sur la barre est réglée par coulissement d'un anneau (24) sur la barre, anneau dans lequel passe la sangle.

4. Container selon la revendication 3, dans lequel les feuilles de verre étant espacées les unes des autres à leur partie supérieure par des cavaliers (17) alignés sous la barre de brelage, l'anneau coulissant sur la barre est pressé contre le cavalier de la feuille de verre la plus distante du dossier, par tension de la sangle.

5. Container selon la revendication 4, dans lequel la forme et les dimensions de l'anneau sont choisies pour qu'il s'appuie sur la partie du cavalier située au dessus de la feuille de verre.

6. Container selon l'une des revendications précédentes, dans lequel la sangle se compose de deux éléments constituant deux boucles réunies par un anneau (33) une boucle étant fixée au dossier et s'étendant au moins le long de la barre de brelage, l'autre boucle (34) s'étendant sur une partie au moins de la hauteur du lot de feuilles depuis le point de fixation (21) au socle.

7. Container selon la revendication 6, dans lequel la boucle de sangle fixée au dossier reste solidaire du container, et est réutilisée avec lui, seule la seconde boucle de sangle étant rompue pour retirer les feuilles du container.

8. Container selon l'une des revendications 1 à 5 dans lequel la sangle maintenant la barre de brelage contre le lot de feuilles de verre, s'étend seulement sur une partie de la longueur de la barre, longueur correspondant à l'amplitude maximum des variations de profondeur des lots de feuilles de verre, le maintien de la barre à son extrémité coopérant avec le dossier étant obtenu par des moyens solidaires du dossier assurant une série de positions prédéterminées à distance limitée les unes des autres, les positions intermédiaires étant assurées par modulation de la hauteur de la barre de brelage.

## Patentansprüche

1. Behälter für den Transport und die Lagerung von Stapeln bzw. Sätzen bzw. Chargen von Glasscheiben (7), umfassend einen Boden, der mit Trennmitteln (13) für die Scheiben versehen ist, eine im wesentlichen vertikale oder geringfügig geneigte Rückseite, seitliche Blockierungsmittel (12), die auf die Seitenabmessungen der Scheiben angepaßt sind, und Festlegungs- bzw. Verzurrstangen (14, 15), die auf dem Oberteil des Stapels von Scheiben angeordnet sind, wobei ein Ende dieser Stangen in gleitendem Eingriff in Ständern bzw. Stehern (8) ist, die die Rückseite des Behälters ausbilden, wobei die Festlegungsstangen gegen den Stapel von Scheiben durch Gurte bzw. Riemen (16, 17) festgelegt sind, welche an Festlegungspunkten (20, 21) durchtreten, welche mit der Struktur des Behälters (1) verbunden bzw. einstückig bzw. solidar sind, **dadurch gekennzeichnet, daß** die Gurte auf den Festlegungsstangen angeordnet sind bzw. über diese durchgehen bzw. hinübertreten und daß, um den Stapel von Scheiben in der Tiefe des Behälters zu halten, der Abstand zwischen der Rückseite und dem Durchgangspunkt der Gurte auf der Festlegungsstange an der dem Rücken bzw. der Rückseite gegenüberliegenden bzw. entgegengesetzten Seite einstellbar ist, um die Tiefe des Stapels von Scheiben einzustellen.

2. Behälter nach Anspruch 1, in welchem der Abstand zwischen der Rückseite und dem Durchgangspunkt des Gurts auf der Festlegungsstange durch das Spiel eines teleskopischen Zusammenbaus der Stange fest geregelt bzw. eingestellt ist.

3. Behälter nach Anspruch 1, in welchem die Position des Durchgangspunkts des Gurts auf der Stange durch ein Gleiten eines Rings (24) auf der Stange geregelt bzw. reguliert ist, durch welchen Ring der Gurt hindurchtritt.

4. Behälter nach Anspruch 3, in welchem die Glasscheiben voneinander an ihrem oberen Bereich durch Reiter (17) beabstandet sind, die unter der Festlegungsstange ausgerichtet sind, wobei der Ring, der auf der Stange gleitet, gegen den Reiter der Glasscheibe, die am weitesten von der Rückseite entfernt ist, durch die Spannung bzw. den Druck des Gurts gedrückt bzw. gepreßt ist.

5. Behälter nach Anspruch 4, in welchem die Form und die Abmessungen des Rings gewählt sind, damit sie sich auf dem Teil des Reiters abstützt, der über der Glasscheibe angeordnet ist.

6. Behälter nach einem der vorhergehenden Ansprüche, in welchem sich der Gurt aus zwei Elementen zusammensetzt, welche zwei miteinander durch einen Ring (33) verbundene Schnallen bzw. Schlaufen bzw. Ösen ausbilden, wobei eine Schlaufe auf der Rückseite festgelegt ist und sich wenigstens entlang der Festlegungsstange erstreckt, wobei sich die andere Schlaufe (34) auf einem Teil wenigstens der Höhe des Stapels der Scheiben von dem Festlegungspunkt (21) am Sockel erstreckt.

7. Behälter nach Anspruch 6, in welchem die Gurtschlaufe, die auf der Rückseite festgelegt ist, mit dem Behälter einstückig bzw. verbunden verbleibt und mit diesem wieder verwendet ist, wobei nur die zweite Gurtschlaufe gebrochen wird, um die Scheiben aus dem Behälter herauszuziehen bzw. zu entnehmen.

8. Behälter nach einem der Ansprüche 1 bis 5, in welchem die Schnalle, die die Festlegungsstange gegen den Stapel von Glasscheiben hält, sich nur auf einem Teil der Länge der Stange erstreckt, wobei die Länge der maximalen Amplitude der Variationen der Tiefe der Stapel der Glasscheiben entspricht, wobei die Halterung der Stange an ihrem Ende, das mit der Rückseite kooperiert bzw. zusammenwirkt, durch mit der Rückseite verbundene Mittel erhalten wird, welche eine vorbestimmte Serie von Positionen in beschränktem Abstand eine zur anderen definieren, wobei die zwischenliegenden Positionen durch Modulation der Höhe der Festlegungsstange sichergestellt sind.

## Claims

1. Container for transporting and storing batches of glass sheets (7) comprising a floor fitted with means (13) for separating the sheets, a substantially vertical or slightly inclined backrest, lateral arresting means (12), which are adjustable to the side dimensions of the sheets, and strapping bars (14, 15) disposed on the upper part of the batch of sheets, one end of these bars being engaged to slide into the struts (8) forming the backrest of the container, said strapping bars being held against the batch of sheets by straps (16, 17) running through attachment points (20, 21) fixed with respect to the structure of the container, **characterised in that** the straps pass through the strapping bars, and **in that** to hold the batch of sheets down in the body of the container, the distance between the backrest and the location where the strap runs through the strapping bar from the opposite side of the backrest is variable for adjustment to the depth of the batch of sheets.

2. Container according to Claim 1, wherein the distance between the backrest and the location where the strap runs through the strapping bar is controlled by the adjustment of a telescopic assembly of the bar.

3. Container according to Claim 1, wherein the position of the location where the strap passes through the bar is controlled by a ring (24) sliding on the bar, the strap passing through said ring.

4. Container according to Claim 3, wherein the sheets of glass are spaced from one another on their upper part by clamps (17) arranged in a line below the strapping bar, and the ring sliding on the bar is pressed against the clamp of the sheet of glass the furthest away from the backrest by the tension of the strap.

5. Container according to Claim 4, wherein the shape and dimensions of the ring are chosen so that it rests on the part of the clamp located above the sheet of glass.

6. Container according to one of the preceding claims, wherein the strap consists of two elements forming two buckles joined by a ring (33), one buckle being fastened to the backrest and extending at least along the length of the strapping bar, the other buckle (34) extending over at least a part of the height of the batch of sheets from the fastening point (21) to the base.

7. Container according to Claim 6, wherein the buckle of the strap fixed to the backrest remains an integral part of the container and is reused with it, only the second strap buckle is opened to remove the sheets from the container.

8. Container according to one of Claims 1 to 5, wherein the strap holding the strapping bar against the batch of glass sheets extends only over a part of the length of the bar, said length corresponding to the maximum amplitude of the variations in depth of the batches of glass sheets, the bar being held at its end cooperating with the backrest by means of elements fixed with respect to the backrest, which ensure a series of predetermined positions at a limited distance from one another, the intermediate positions being assured by modulating the height of the strapping bar.
